# DEMANDE DE BREVET EUROPEEN

(11) **EP 4 296 337 A1**
(43) Date de publication de la demande: **27.12.2023**
(21) Numéro de dépôt: 23181010.2
(22) Date de dépôt: 22.06.2023
(51) Int. Cl.: C10G 7/10, C02F 1/00

(54) **PROCÉDÉ DE DISTILLATION DE COMPOSITION PÉTROLIÈRE CONTENANT DU SULFURE D HYDROGÈNE ET CONTAMINÉ PAR DES ALDÉHYDES**

(30) Priorité: 22.06.2022 FR 2206144
(71) Demandeur: TOTALENERGIES ONETECH, 92400 Courbevoie (FR)
(72) Inventeur: CLAISSE, Sébastien, 76700 HARFLEUR (FR); MAJOREL, Céline, 76700 HARFLEUR (FR); CIROU, Clarisse, 76700 HARFLEUR (FR); BRETON, Audrey, 76700 HARFLEUR (FR); THORET-BAUCHET, Jean-Pierre, 76700 HARFLEUR (FR)
(74) Mandataire: Fédit-Loriot

(57) **Abrégé**

L'invention concerne un procédé de distillation de pétrole brut et une installation de mise en oeuvre. Le procédé comprend les étapes suivantes : on fournit une installation de distillation (10) comprenant, une colonne de distillation (18) présentant une extrémité de sortie inférieure (20) opposée à une extrémité de sortie supérieure (22) et un réceptacle (24) relié à ladite extrémité de sortie supérieure ; on fournit un pétrole brut contenant du sulfure d'hydrogène et un composé aldéhydique ; on alimente ladite colonne de distillation (18) avec ledit pétrole brut et avec de la vapeur d'eau ; et, on récupère, à l'intérieur dudit réceptacle (24), un mélange aqueux contenant du sulfure d'hydrogène et du composé aldéhydique. On fournit en outre une composition de bisulfite, et en ce qu'on injecte de ladite composition de bisulfite à l'intérieur dudit mélange aqueux de manière à pouvoir inhiber la polymérisation dudit sulfure d'hydrogène et dudit composé aldéhydique.

## Description

La présente invention se rapporte à un procédé de distillation de composition pétrolière contenant du sulfure d'hydrogène, et étant contaminée par des aldéhydes.

Les installations de raffinage de pétrole brut usuelles comprennent des colonnes de distillation, et notamment, une colonne de distillation atmosphérique s'étendant verticalement d'une extrémité inférieure de sortie jusqu'à une extrémité supérieure de sortie.

La colonne de distillation atmosphérique est alimentée d'une composition pétrolière issue du pétrole brut. Et le procédé de distillation permet de séparer la composition en coupes pétrolières selon le point d'ébullition de chacune d'entre elles.

Aussi, on injecte dans la colonne de distillation, de la vapeur d'eau pour abaisser la pression partielle des différents composés et notamment des plus volatiles, pour faciliter leur ébullition.

À l'extrémité supérieure de la colonne de distillation, autrement dit, la tête de colonne, on récupère à l'intérieur d'un réceptacle ou ballon, trois phases distinctes : une phase aqueuse, une phase d'hydrocarbures liquide et une phase d'hydrocarbures gazeuse.

Par ailleurs, le pétrole brut et les compositions pétrolières qui en sont issues, contiennent naturellement du sulfure d'hydrogène, en plus ou moins grande quantité en fonction de la provenance du pétrole brut.

Le sulfure d'hydrogène est un composé toxique, de sorte que des additifs peuvent être ajoutés au pétrole brut pour le neutraliser. Les additifs peuvent contenir des composés aldéhydiques.

Les composés aldéhydiques et le sulfure d'hydrogène sont très volatils, et par conséquent, durant la distillation, ils tendent à se concentrer dans la tête de colonne et à venir se condenser plus ou moins partiellement dans la phase aqueuse du ballon.

Or, le sulfure d'hydrogène et les composés aldéhydiques en phase aqueuse tendent à polymériser ensemble très rapidement et à encrasser les circuits avals de traitement de la phase aqueuse.

Les installations de raffinage comprennent généralement d'autres types de colonnes de distillation, et en particulier une colonne de distillation sous vide, située en aval de la colonne de distillation atmosphérique et qui permet de distiller les fractions lourdes des produits de la distillation atmosphérique, récupérées à l'extrémité inférieure de sortie, soit en pied de colonne.

Cette colonne de distillation sous vide comporte également une extrémité supérieure de sortie où se concentrent de manière analogue à la colonne de distillation atmosphérique, les composés aldéhydiques et le sulfure d'hydrogène encore contenus dans les fractions lourdes, et où on les récupère dans un ballon à l'intérieur d'une phase aqueuse. Et de la même façon, ils tendent à polymériser ensemble.

Il se produit le même phénomène, pour encore un autre type de colonnes de distillation, situées celles-là, en amont de la colonne de distillation atmosphérique et usuellement dénommées, colonnes de « préflash ». Ces colonnes sont à une pression supérieure à la pression atmosphérique et elles permettent d'extraire les fractions les plus légères du pétrole brut.

Aussi, un problème qui se pose et que vise à résoudre la présente invention est de fournir un procédé qui permette d'éviter l'encrassement des circuits avals de traitement du mélange aqueux des colonnes de distillation.

Dans le but de résoudre ce problème, selon un premier objet, il est proposé un procédé de distillation de composition pétrolière comprenant les étapes suivantes : on fournit une colonne de distillation présentant une extrémité de sortie inférieure opposée à une extrémité de sortie supérieure ; on fournit un réceptacle relié à ladite extrémité de sortie supérieure de ladite colonne de distillation ; on fournit une composition pétrolière contenant du sulfure d'hydrogène et un composé aldéhydique ; on alimente ladite colonne de distillation avec ladite composition pétrolière et avec de la vapeur d'eau ; et, on récupère, à l'intérieur dudit réceptacle, un mélange aqueux contenant dudit sulfure d'hydrogène et dudit composé aldéhydique. Et, on fournit en outre une composition de bisulfite, et on injecte de ladite composition de bisulfite à l'intérieur dudit mélange aqueux de manière à pouvoir inhiber la polymérisation dudit sulfure d'hydrogène et dudit composé aldéhydique ensemble.

Ainsi, une caractéristique de l'invention réside dans la mise en oeuvre d'une composition de bisulfite et dans l'injection de la composition de bisulfite à l'intérieur du mélange aqueux contenu à l'intérieur du réceptacle. Le bisulfite réagit avec le composé aldéhydique et empêche ainsi ce dernier de polymériser avec le sulfure d'hydrogène. Partant, la composition de bisulfite permet de prévenir l'encrassement des circuits avals de traitement du mélange aqueux des colonnes de distillation d'une installation de raffinage.

Selon un premier mode de mise en oeuvre particulier, ladite colonne de distillation fonctionne à une pression voisine de la pression atmosphérique. Une telle colonne est alimentée avec une composition pétrolière préchauffée à une température voisine de 370 °C, tandis que de la vapeur d'eau est injectée dans la colonne pour abaisser la pression partielle des composés les plus volatiles. De la sorte on sépare la composition pétrolière en différentes coupes en fonction de leur point d'ébullition.

Selon un deuxième mode de mise en oeuvre, ladite colonne de distillation fonctionne à une pression inférieure à la pression atmosphérique. Autrement dit, la colonne de distillation est sous vide, par exemple à une pression comprise entre trente et cinquante millibars. Ces deux modes de mise en oeuvre ne sont pas exclusifs l'un de l'autre.

Ainsi, préférentiellement, selon un premier mode de réalisation et conformément au procédé de distillation de composition pétrolière selon l'invention :
- on fournit une première colonne de distillation fonctionnant à pression atmosphérique et présentant une première extrémité de sortie inférieure opposée à une première extrémité de sortie supérieure ;
- on fournit un premier réceptacle relié à ladite première extrémité de sortie supérieure de ladite première colonne de distillation ;
- on fournit une première composition pétrolière contenant du sulfure d'hydrogène et un composé aldéhydique ;
- on alimente ladite première colonne de distillation avec ladite première composition pétrolière et avec de la vapeur d'eau ; et,
- on récupère, à l'intérieur dudit premier réceptacle, un premier mélange aqueux contenant dudit sulfure d'hydrogène et dudit composé aldéhydique.

On fournit en outre une première composition de bisulfite, et on injecte de ladite première composition de bisulfite à l'intérieur dudit premier mélange aqueux de manière à pouvoir inhiber la polymérisation dudit sulfure d'hydrogène et dudit composé aldéhydique ensemble.

De plus, selon ce premier mode de réalisation de l'invention :
- on fournit en outre une deuxième colonne de distillation fonctionnant à une pression inférieure à la pression atmosphérique et présentant une deuxième extrémité de sortie inférieure opposée à une deuxième extrémité de sortie supérieure, ladite deuxième colonne étant reliée à ladite première extrémité de sortie inférieure de ladite première colonne ;
- on fournit un deuxième réceptacle relié à ladite deuxième extrémité de sortie supérieure de ladite deuxième colonne de distillation ;
- on fournit une deuxième composition pétrolière issue de ladite première extrémité de sortie inférieure de ladite première colonne et contenant dudit sulfure d'hydrogène et dudit composé aldéhydique ;
- on alimente ladite deuxième colonne de distillation avec ladite deuxième composition pétrolière et avec de la vapeur d'eau ; et,
- on récupère, à l'intérieur dudit deuxième réceptacle, un deuxième mélange aqueux contenant dudit sulfure d'hydrogène et dudit composé aldéhydique.

On fournit en outre une deuxième composition de bisulfite, et on injecte de ladite deuxième composition de bisulfite à l'intérieur dudit deuxième mélange aqueux de manière à pouvoir inhiber la polymérisation dudit sulfure d'hydrogène et dudit composé aldéhydique ensemble.

Ainsi, selon ce premier mode de réalisation, la deuxième colonne de distillation est installée en aval de la première colonne de distillation. Aussi, la première colonne de distillation est à la pression atmosphérique, tandis que la deuxième colonne fonctionne sous vide. Cette dernière est alimentée avec ladite deuxième composition pétrolière, laquelle est issue de la première extrémité de sortie inférieure de la première colonne de distillation. La deuxième composition pétrolière contient des hydrocarbures à haut point d'ébullition. Et elle contient encore dudit sulfure d'hydrogène et dudit composé aldéhydique.

Autrement dit, la deuxième colonne de distillation est alimentée avec des fractions lourdes de pétrole brut, dont la température de distillation à pression atmosphérique est plus élevée. La colonne de distillation sous vide permet ainsi de séparer différentes coupes pétrolières, plus lourdes, à la même température, au voisinage de 370 °C.

Ainsi, on injecte de la composition de bisulfite, non seulement à l'intérieur du mélange aqueux contenu à l'intérieur du premier réceptacle, mais aussi à l'intérieur du deuxième mélange aqueux contenu dans le deuxième réceptacle. Le bisulfite réagit alors avec le composé aldéhydique et empêche ainsi ce dernier de polymériser avec le sulfure d'hydrogène.

Selon un troisième mode de mise en oeuvre, ladite colonne de distillation fonctionne à une pression supérieure à la pression atmosphérique.

Autrement dit, ladite colonne de distillation est sous pression par exemple à une pression comprise entre 1,5 et 2 bar. Ce troisième mode de mise en oeuvre n'est pas exclusif du premier mode de mise en oeuvre, ni du deuxième.

Ainsi, selon un deuxième mode de réalisation et conformément au procédé de distillation de composition pétrolière selon l'invention :
- on fournit en outre une troisième colonne de distillation fonctionnant à une pression supérieure à la pression atmosphérique et présentant une troisième extrémité de sortie inférieure opposée à une troisième extrémité de sortie supérieure, ladite troisième extrémité de sortie inférieure étant reliée à ladite première colonne ;
- on fournit un troisième réceptacle relié à ladite troisième extrémité de sortie supérieure de ladite troisième colonne de distillation ;
- on fournit une troisième composition pétrolière contenant dudit sulfure d'hydrogène et dudit composé aldéhydique ;
- on alimente ladite troisième colonne de distillation avec ladite troisième composition pétrolière et avec de la vapeur d'eau ; et,
- on récupère, à l'intérieur dudit troisième réceptacle, un troisième mélange aqueux contenant dudit sulfure d'hydrogène et dudit composé aldéhydique.

On fournit en outre une troisième composition de bisulfite, et on injecte de ladite troisième composition de bisulfite à l'intérieur dudit troisième mélange aqueux de manière à pouvoir inhiber la polymérisation dudit sulfure d'hydrogène et dudit composé aldéhydique ensemble.

Ainsi, selon ce deuxième mode de réalisation, la troisième colonne de distillation est installée en amont de la première colonne de distillation fonctionnant à la pression atmosphérique. Aussi, la troisième colonne de distillation est alimentée en pétrole brut en tant que troisième composition, à une pression supérieure à la pression atmosphérique, par exemple entre 1,5 bars et 2 bars. Ce pétrole brut est à une température comprise par exemple entre 130 °C et 220 °C, et ladite troisième colonne de distillation permet d'en extraire les fractions les plus légères.

Aussi, la composition pétrolière issue de la troisième extrémité inférieure permet d'alimenter la première colonne de distillation atmosphérique et correspond à ladite première composition pétrolière.

Selon un troisième mode de réalisation, on fournit une quatrième colonne de distillation analogue à la troisième colonne de distillation et située en amont de celle-ci. Cette quatrième colonne de distillation joue le même rôle que la troisième.

Avantageusement, ladite composition de bisulfite comprend du bisulfite de sodium. Le bisulfite de sodium est abondamment disponible à un coût avantageux. Par ailleurs, il peut aisément être injecté en phase liquide au moyen d'une pompe.

En outre, et de façon particulièrement avantageuse, on injecte une quantité de ladite composition de bisulfite de manière à ce que le rapport du bisulfite et du composé aldéhydique soit supérieur à trois. Autrement dit, en considérant qu'une molécule de bisulfite réagit avec une molécule du composé aldéhydique afin de la neutraliser, on apporte une quantité de la composition de bisulfite qui soit supérieure à trois fois la stoechiométrie de la réaction. De la sorte, on neutralise près de 75 % du composé aldéhydique.

Aussi, on peut accepter que 25 % de ce composé ne soit pas neutralisé et qu'il puisse réagir en polymérisant avec le sulfure d'hydrogène. L'injection de bisulfite permet ainsi de réduire l'encrassement par polymérisation du sulfure d'hydrogène et du composé aldéhydique.

Préférentiellement, on injecte une quantité de la composition de bisulfite correspondant sensiblement à cinq fois la stoechiométrie de la réaction. De la sorte, on s'assure d'une neutralisation à 80 % du composé aldéhydique.

Selon un autre objet de l'invention, il est proposé une installation de distillation de composition pétrolière pour la mise en oeuvre du procédé tel que décrit ci-dessus. Elle comprend : une colonne de distillation présentant une extrémité de sortie inférieure opposée à une extrémité de sortie supérieure ; un réceptacle relié à ladite extrémité de sortie supérieure ; une arrivée d'une composition pétrolière contenant du sulfure d'hydrogène et un composé aldéhydique pour alimenter ladite colonne de distillation avec ladite composition pétrolière, et des moyens de production de vapeur d'eau pour pouvoir alimenter ladite colonne de distillation avec de la vapeur d'eau, tandis qu'un mélange aqueux contenant du sulfure d'hydrogène et du composé aldéhydique est récupéré à l'intérieur dudit réceptacle. L'installation comprend en outre un réservoir d'une composition de bisulfite relié audit réceptacle, pour pouvoir injecter de ladite composition de bisulfite à l'intérieur dudit mélange aqueux et de manière à pouvoir inhiber la polymérisation dudit sulfure d'hydrogène et dudit composé aldéhydique.

Le réceptacle accueille ainsi le mélange aqueux dans sa partie basse, et le mélange aqueux est surmonté d'une phase liquide d'hydrocarbures. Ainsi, on peut alors soutirer le mélange aqueux pour le mélanger à la composition de bisulfite. Cette dernière peut alors réagir avec le composé aldéhydique afin d'inhiber la réaction de polymérisation du sulfure d'hydrogène et du composé aldéhydique comme décrit ci-dessus.

Conformément au procédé selon invention, on prévoit la mise en oeuvre d'une première colonne de distillation fonctionnant à la pression atmosphérique, d'une deuxième colonne de distillation, en aval de la première colonne et fonctionnant à une pression inférieure à la pression atmosphérique, et, préférentiellement, d'au moins une troisième colonne, en amont de la première colonne et fonctionnant à une pression supérieure à la pression atmosphérique. Chacune des colonnes est alors équipée d'un réceptacle adapté à recueillir un mélange aqueux et d'un réservoir d'une composition de bisulfite afin de pouvoir traiter le mélange aqueux, comme on l'expliquera plus en détail dans la suite de la description.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1A] est un schéma synoptique de l'installation de distillation conforme à l'invention ;
[Fig. 1B] est un schéma complémentaire de l'installation de distillation illustré sur la [Fig. 1A] ; et,
[Fig. 2] est un logigramme du procédé selon l'invention.

On décrira en premier lieu l'installation de distillation permettant de mettre en oeuvre le procédé conforme à l'invention, que l'on décrira ensuite.

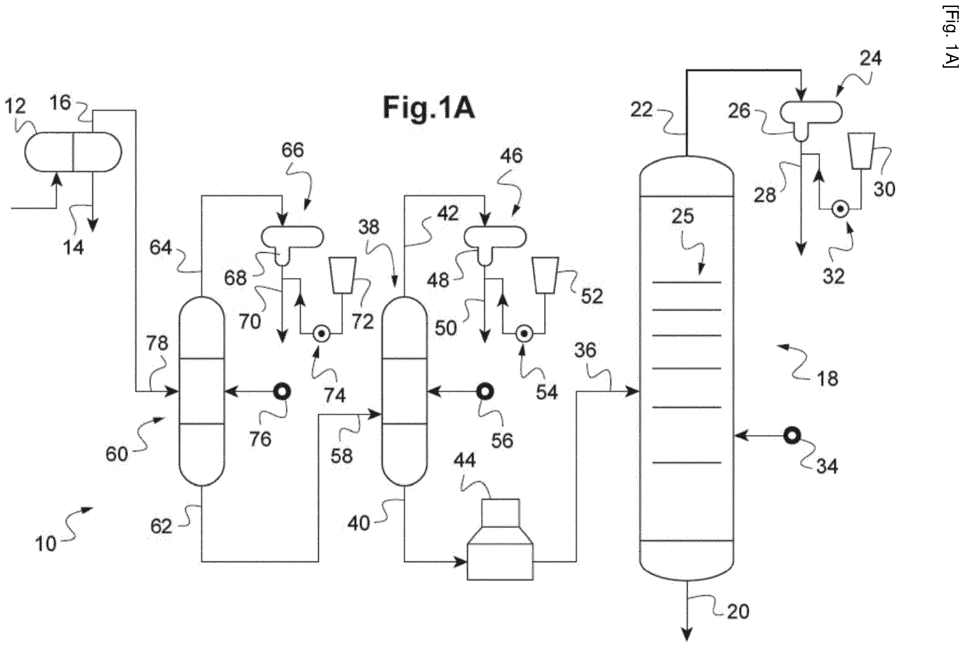

Ainsi, la [Fig. 1A] montre, schématiquement, une installation de distillation 10 de pétrole brut selon un mode de mise en oeuvre de l'invention non limitatif.

Une composition de pétrole brut est acheminée depuis une réserve jusqu'à des dispositifs de dessalage 12. La composition de pétrole brut y est alors « lavée ».

Elle comprend un mélange de différents produits hydrocarbonés et de sédiments. Elle comprend au surplus naturellement du sulfure d'hydrogène. Aussi, on y injecte en amont un composé aldéhydique, par exemple du formaldéhyde, lequel réagit avec le sulfure d'hydrogène et permet ainsi de le neutraliser.

Les dispositifs de dessalage 12, encore dénommés « dessaleurs », visent à mettre en contact la composition de pétrole brut avec de l'eau et à appliquer un champ électrostatique au mélange. De la sorte, on provoque la séparation des sédiments du mélange des produits hydrocarbonés et retire de l'eau de la composition.

Outre des sédiments, une partie du formaldéhyde contenue dans la composition de pétrole brut se retrouve dans l'eau de sortie des dispositifs de dessalage 12, qui s'évacue à travers une première sortie 14 des dispositifs de dessalage 12. Des hydrocarbures sont aussi contenus dans cette eau de sortie. Comme on l'expliquera plus en détail dans la suite de la description, cette eau de sortie peut être envoyée vers un dispositif de traitement non représenté.

Ainsi, à travers une deuxième sortie 16 des dispositifs de dessalage 12, est évacuée une composition de pétrole brut dessalée qui va pouvoir entrer dans un cycle de séparation comme on va l'expliquer ci-après.

On décrira auparavant, l'installation de distillation 10, de l'aval vers l'amont. Ainsi, elle comprend une première colonne de distillation 18, dite : « colonne de distillation atmosphérique », car sa pression interne est à la pression atmosphérique. Cette première colonne 18 permet de séparer en coupes pétrolières distinctes, l'essentiel du mélange de produits hydrocarbonés précités.

La colonne de distillation atmosphérique 18 s'étend verticalement et elle présente, en pied de colonne, une première extrémité de sortie inférieure 20 opposée à une première extrémité de sortie supérieure 22, située en tête de colonne. Entre ses deux extrémités, elle comprend une succession de plateaux superposés 25 permettant le fractionnement des différentes coupes et leur récupération.

L'installation de distillation 10 comprend également un premier réceptacle 24, ou ballon, dans lequel débouche directement la première extrémité supérieure 22 de la première colonne de distillation 18.

Le premier réceptacle 24 comporte une zone principale communiquant avec une zone périphérique formant une première « botte » 26 et située en dessous de la zone principale. La première botte 26 présente une première sortie de botte 28.

En outre, l'installation 10 comprend également un premier réservoir 30 d'une composition de bisulfite, et plus particulièrement du bisulfite de sodium, relié directement à la première sortie de botte 28, par l'intermédiaire d'une première pompe doseuse 32.

Aussi, l'installation 10 comprend, d'une part un premier générateur de vapeur 34 permettant d'injecter de la vapeur d'eau à l'intérieur de la première colonne de distillation 18, et d'autre part une première entrée 36 permettant directement l'arrivée de pétrole brut, ou d'une composition pétrolière, comme on l'expliquera ci-après.

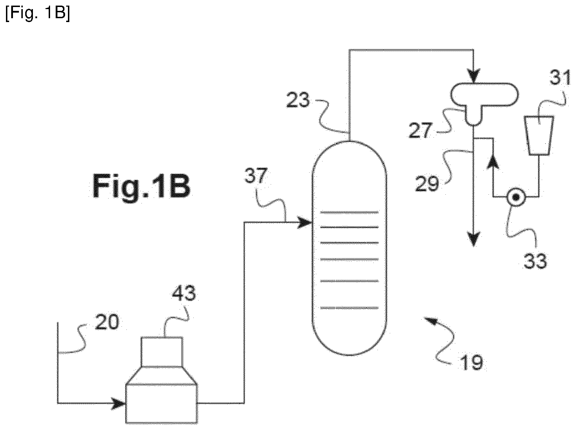

En aval de la première colonne de distillation 18, l'installation 10 comprend en outre une deuxième colonne de distillation 19, illustrée sur la [Fig. 1B]. Comme on l'expliquera ci-après, la pression interne de la deuxième colonne de distillation 19 est inférieure à la pression atmosphérique. Autrement dit, elle est sous vide.

La deuxième colonne de distillation 19 s'étend verticalement. Elle présente, une deuxième entrée 37 et une deuxième extrémité de sortie supérieure 23, située en tête de colonne.

La deuxième colonne 19 est équipée d'un deuxième réceptacle 21, ou ballon, dans lequel débouche directement sa deuxième extrémité de sortie supérieure 23.

Le deuxième réceptacle 21 comporte une deuxième botte 27 présentant une deuxième sortie de botte 29.

Aussi, l'installation 10 comprend également un deuxième réservoir 31 contenant une composition de bisulfite, et relié directement à la deuxième sortie de botte 29, par l'intermédiaire d'une deuxième pompe doseuse 33.

La deuxième colonne 19 est reliée à la première extrémité de sortie inférieure 20 de la première colonne de distillation 18 par l'intermédiaire d'un premier four 43. On expliquera plus en détail dans la suite de la description le rôle du premier four 43 et de la deuxième colonne 19 fonctionnant sous vide.

En outre, en amont de la colonne de distillation atmosphérique 18, l'installation de distillation 10 comprend une troisième colonne 38, dite colonne de « préflash ». Elle s'étend verticalement et elle présente une troisième sortie de pied de colonne 40 opposée à une troisième sortie de tête 42.

La troisième sortie de pied de colonne 40 est alors reliée à la première entrée 36 de la colonne de distillation 18 par l'intermédiaire d'un deuxième four 44 dont on expliquera la fonction dans la suite de la description.

L'installation de distillation 10 comprend un troisième réceptacle ou ballon 46 dans lequel débouche la troisième sortie de tête 42 de la troisième colonne 38.

Le troisième réceptacle 46 comporte plusieurs zones communiquant les unes avec les autres et une troisième botte de ballon 48 situé en dessous du niveau des autres zones. La troisième botte de ballon 48 présente une troisième sortie de botte de ballon 50.

L'installation 10 comprend également un troisième réservoir 52 de bisulfite de sodium, relié directement à la troisième sortie de botte de ballon 50, par l'intermédiaire d'une troisième pompe doseuse 54.

Aussi, l'installation 10 comprend, d'une part un troisième générateur de vapeur 56 permettant d'injecter de la vapeur d'eau à l'intérieur de la troisième colonne de séparation 38, et d'autre part une troisième entrée 58 permettant l'arrivée d'une composition pétrolière comme on l'expliquera ci-après.

Avantageusement, l'installation 10 comprend un seul générateur de vapeur pour alimenter à la fois la colonne de distillation atmosphérique 18 et la troisième colonne 38.

En amont de la troisième colonne 38, l'installation de distillation 10 comprend une quatrième colonne de séparation 60, dite également colonne de « préflash », et sensiblement équivalente à la troisième 38.

Elle s'étend verticalement et elle présente une quatrième sortie de pied de colonne 62 opposée à une quatrième sortie de tête 64.

La quatrième sortie de pied 62 est directement reliée à la troisième entrée 58 de la troisième colonne 38.

L'installation de distillation 10 comprend un quatrième réceptacle ou ballon 66, dans lequel débouche la quatrième sortie de tête 64.

Le quatrième réceptacle 66 comporte également plusieurs zones communiquant les unes avec les autres et une quatrième botte de ballon 68 situé en dessous du niveau des autres zones. La quatrième botte de ballon 68 présente une quatrième sortie de botte de ballon 70.

L'installation 10 comprend également un quatrième réservoir 72 de bisulfite de sodium, relié directement à la quatrième sortie de botte de ballon 70, par l'intermédiaire d'une quatrième pompe doseuse 74.

Aussi, l'installation 10 comprend, selon un mode de mise en oeuvre, un quatrième générateur de vapeur 76 permettant d'injecter de la vapeur d'eau à l'intérieur de la quatrième colonne 60 d'une part, et une quatrième entrée 78 reliée à la deuxième sortie 16 des dispositifs de dessalage 12 d'autre part, permettant l'arrivée de la composition de pétrole brut dessalé qui s'en écoule.

Aussi, selon un autre mode de mise en oeuvre, un seul générateur de vapeur permet d'alimenter à la fois la colonne de distillation atmosphérique 18, la troisième colonne 38 et la quatrième colonne 60.

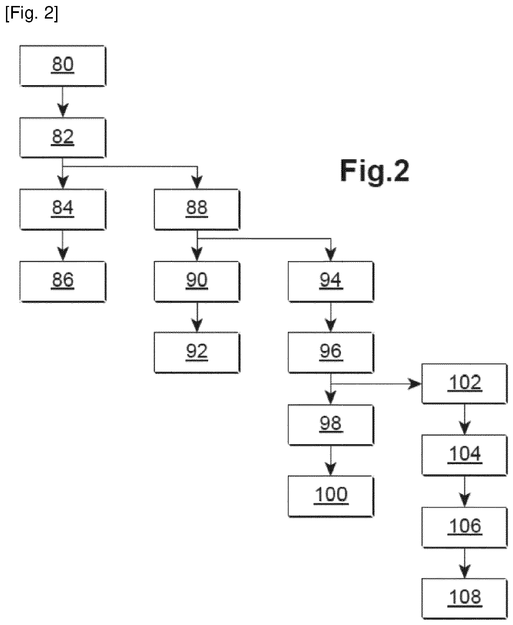

On décrira à présent en référence au logigramme représenté sur la [Fig. 2], et à l'installation illustrée sur les [Fig. 1A] et [Fig. 1B], le procédé de distillation conforme à l'invention.

Ainsi, après l'étape de « lavage » 80 de la composition de pétrole brut à travers les dispositifs de dessalage 12, comme décrit ci-dessus, selon une première étape d'alimentation 82, la composition de pétrole brut dessalé est injectée dans la quatrième colonne de séparation 60 à travers la quatrième entrée 78. Elle est injectée sous pression, à une pression supérieure à 1,5 bar par exemple, et à une température comprise entre 130°C et 220°C.

Le formaldéhyde contenu dans la composition de pétrole brut dessalé se vaporise et s'évacue à travers la quatrième sortie de tête 64 avec les fractions des produits hydrocarbonés les plus légers, du sulfure d'hydrogène, ainsi qu'entre autres de la vapeur d'eau. Celle-ci provient essentiellement de la vapeur d'eau injectée dans la quatrième colonne 60 via le quatrième générateur de vapeur 76.

La vapeur d'eau se condense dans le quatrième ballon 66 et est alors récupérée, selon une première étape de récupération 84, à l'intérieur de la quatrième botte de ballon 68, tandis que les produits hydrocarbonés en phases liquide et gazeuse se situent au-dessus.

On récupère également dans la composition aqueuse, à l'intérieur de la quatrième botte de ballon 68, du formaldéhyde et aussi du sulfure d'hydrogène.

Afin d'éviter que le formaldéhyde ne réagisse avec le sulfure d'hydrogène en polymérisant, ou à tout le moins pour réduire la possibilité de cette réaction en aval de la quatrième sortie 70, selon une première étape de neutralisation 86, on injecte du bisulfite de sodium par le biais du troisième réservoir 72 de bisulfite et de la quatrième pompe doseuse 74. Autrement dit, au fur et à mesure que la composition aqueuse s'écoule en continu à travers la quatrième sortie de botte de ballon 70, on y injecte du bisulfite de sodium, lequel est sous forme liquide.

Le bisulfite de sodium réagit en effet avec le formaldéhyde pour former un complexe organique, à raison d'une molécule pour une molécule. De la sorte, le bisulfite permet d'inhiber la réaction du formaldéhyde avec le sulfure d'hydrogène.

Aussi, afin de neutraliser au moins 80% du formaldéhyde, contenu à l'intérieur de la composition aqueuse de la quatrième botte de ballon 68, on injecte cinq fois plus de bisulfite de sodium qu'il n'en faut pour neutraliser le formaldéhyde.

La composition aqueuse ainsi traitée est acheminée à flux continu à travers la quatrième sortie de botte de ballon 70 et véhiculée vers une unité de traitement d'eau comme on l'expliquera ci-après.

Parallèlement aux premières étapes d'alimentation 82, de récupération 84 et de neutralisation 86, les produits hydrocarbonés plus lourds de la composition de pétrole brut dessalé, s'écoulent vers la quatrième sortie de pied 62.

Ils constituent une deuxième composition de pétrole brut qui s'achemine à travers la quatrième sortie de pied 62, pour venir alimenter, selon une deuxième étape d'alimentation 88, la troisième colonne 38.

De façon analogue au traitement de la composition de pétrole brut dessalé à travers la quatrième colonne de séparation 60, la deuxième composition de pétrole brut est injectée sous pression, à une température comprise entre 130°C et 220°C et concomitamment à de la vapeur d'eau.

Le formaldéhyde et les fractions des produits hydrocarbonés légers incluant du sulfure d'hydrogène, encore contenus dans la deuxième composition de pétrole brut s'évacue également sous forme vapeur à travers la troisième sortie de tête 42 avec la vapeur d'eau.

De façon analogue, la vapeur d'eau se condense dans le troisième réceptacle ou ballon 46, et est récupérée, selon une deuxième étape de récupération 90, à l'intérieur de la troisième botte de ballon 48.

On récupère également dans la composition aqueuse de la troisième botte de ballon 48, du formaldéhyde et du sulfure d'hydrogène.

Aussi, selon une deuxième étape de neutralisation 92, on injecte du bisulfite de sodium par le biais du deuxième réservoir 52 de bisulfite et de la deuxième pompe doseuse 54 à travers la troisième sortie de botte de ballon 50.

Le bisulfite de sodium réagit là également avec le formaldéhyde pour former un complexe organique, de manière à inhiber la réaction du formaldéhyde et du sulfure d'hydrogène. Préférentiellement, on injecte également cinq fois plus de bisulfite de sodium qu'il n'en faut pour neutraliser le formaldéhyde.

La composition aqueuse ainsi traitée est acheminée à flux continu à travers la troisième sortie de botte de ballon 50 et véhiculée vers l'unité de traitement d'eau précitée.

Parallèlement, les produits hydrocarbonés, complémentaires des produits hydrocarbonés qui s'évacue à travers la première sortie de tête 42 de la première colonne 38, constituent une troisième composition de pétrole brut qui s'achemine, elle, à travers la troisième sortie de pied 40 pour rejoindre le deuxième four 44.

La troisième composition de pétrole brut est alors chauffée selon une étape de chauffage 94, à une température voisine de 370°C.

La troisième composition de pétrole brut chauffée est alors acheminée à la première entrée 36 de la première colonne, la colonne de distillation atmosphérique 18, dans une troisième étape d'alimentation 96. Et concomitamment, de la vapeur d'eau est injectée dans la première colonne 18 via le premier générateur de vapeur.

La colonne de distillation atmosphérique 18 permet ainsi de distiller à la pression atmosphérique, cette troisième composition de pétrole brut et de fractionner les différentes coupes pétrolières.

Aussi, le formaldéhyde et les fractions des produits hydrocarbonés légers incluant du sulfure d'hydrogène, encore contenus dans la troisième composition de pétrole brut, sont évacués à travers la première extrémité de sortie supérieure 22 avec la vapeur d'eau.

De façon analogue, la vapeur d'eau se condense dans le premier réceptacle 24 et est récupérée, selon une troisième étape de récupération 98, à l'intérieur de la première botte 26.

On récupère dans le mélange aqueux de la première botte 26, du formaldéhyde et du sulfure d'hydrogène.

Selon une troisième étape de neutralisation 100, on injecte du bisulfite de sodium par le biais du premier réservoir 30 de bisulfite et de la première pompe doseuse 32 à travers la première sortie de botte 28.

De la sorte, la réaction de polymérisation du formaldéhyde et du sulfure d'hydrogène est inhibée en aval de cette première sortie 28. Aussi, on injecte cinq fois plus de bisulfite de sodium qu'il n'en faut pour neutraliser le formaldéhyde.

La composition aqueuse traitée est acheminée à flux continu à travers la première sortie de botte 28 et véhiculée vers l'unité de traitement d'eau précitée.

Selon une variante de mise en oeuvre du procédé selon l'invention, et dans certaines circonstances liées à la composition originelle du pétrole brut, on s'affranchit des troisième 38 et quatrième 60 colonnes de distillation.

Aussi, la composition de pétrole brut dessalé issue des dispositifs de dessalage 12 est directement acheminée jusqu'au deuxième four 44 pour être ensuite acheminée à la première entrée 36 de la colonne de distillation atmosphérique 18.

Les étapes d'alimentation 96, de récupération 98 et de neutralisation 100 se déroulent alors comme précitées.

Parallèlement, les fractions lourdes des produits de la distillation atmosphérique, dont la température de distillation à pression atmosphérique est plus élevée, s'acheminent, elles, à travers la première extrémité de sortie inférieure 20 pour rejoindre le premier four 43 illustré sur la [Fig. 1B].

Les fractions lourdes sont alors chauffées dans une deuxième étape de chauffage 102, à une température voisine de 400°C.

Les fractions lourdes chauffées sont alors acheminées à la deuxième entrée 37 de la deuxième colonne 19, la colonne de distillation sous vide, dans une quatrième étape d'alimentation 104.

La colonne de distillation sous vide 19 permet ainsi de distiller sous vide les fractions lourdes à une température voisine de 400 °C et de fractionner les différentes coupes avantageuses.

Aussi, les fractions lourdes contiennent encore du formaldéhyde avec des fractions de produits hydrocarbonés légers incluant encore du sulfure d'hydrogène, lesquels sont évacués à travers la deuxième extrémité de sortie supérieure 23 avec de la vapeur d'eau.

De façon analogue, la vapeur d'eau se condense dans le deuxième réceptacle 21 et est récupérée, selon une quatrième étape de récupération 106, à l'intérieur de la deuxième botte 27.

On récupère dans le mélange aqueux de la deuxième botte 27, du formaldéhyde et du sulfure d'hydrogène.

Selon une quatrième étape de neutralisation 108, on injecte du bisulfite de sodium par le biais du deuxième réservoir 31 de bisulfite et de la deuxième pompe doseuse 31 à travers la deuxième sortie de botte 29.

La réaction de polymérisation du formaldéhyde et du sulfure d'hydrogène est inhibée en aval de cette deuxième sortie 29. Aussi, on injecte cinq fois plus de bisulfite de sodium qu'il n'en faut pour neutraliser le formaldéhyde.

La composition aqueuse traitée est acheminée à flux continu à travers la deuxième sortie de botte 29 et véhiculée vers l'unité de traitement d'eau précitée.

Avantageusement, le mélange aqueux de la première botte 26, le mélange aqueux de la deuxième botte 27, la composition aqueuse issue de la première sortie de botte de ballon 50 et la composition aqueuse issue de la deuxième sortie de botte de ballon 70, sont récupérés ensemble pour être acheminés vers une unité de traitement des eaux.

L'acheminement d'un tel mélange à travers les conduits d'acheminement ne soulève aucune difficulté. Car en effet, le formaldéhyde contenu dans le mélange est en grande partie neutralisé par le bisulfite avec lequel il forme un complexe organique, et il ne réagit que très partiellement avec le sulfure d'hydrogène.

Le mélange est alors traité dans l'unité de traitement constituée d'une colonne de distillation d'eau, laquelle permet d'extraire le sulfure d'hydrogène et aussi l'ammoniac. Le formaldéhyde contenu dans le mélange est récupéré avec les gaz résiduaires, où il polymérise avec le sulfure d'hydrogène. L'eau traitée est en partie recyclée dans l'installation de distillation et, pour une autre partie, acheminée dans une installation de traitement des eaux avant rejet.

## Revendications

1. Procédé de distillation de composition pétrolière comprenant les étapes suivantes :
- on fournit une colonne de distillation (18, 19, 38, 60) présentant une extrémité de sortie inférieure (20, 40, 62) opposée à une extrémité de sortie supérieure (22, 23, 42, 64) ;
- on fournit un réceptacle (24, 21, 46, 66) relié à ladite extrémité de sortie supérieure de ladite colonne de distillation ;
- on fournit une composition pétrolière contenant du sulfure d'hydrogène et un composé aldéhydique ;
- on alimente ladite colonne de distillation (18, 19, 38, 60) avec ladite composition pétrolière et avec de la vapeur d'eau ; et,
- on récupère, à l'intérieur dudit réceptacle (24, 21, 46, 66), un mélange aqueux contenant dudit sulfure d'hydrogène et dudit composé aldéhydique ;
**caractérisé en ce qu'**on fournit en outre une composition de bisulfite, et **en ce qu'**on injecte de ladite composition de bisulfite à l'intérieur dudit mélange aqueux de manière à pouvoir inhiber la polymérisation dudit sulfure d'hydrogène et dudit composé aldéhydique ensemble.

2. Procédé de distillation selon la revendication 1, **caractérisé en ce que** ladite colonne de distillation fonctionne à une pression voisine de la pression atmosphérique.

3. Procédé de distillation selon la revendication 1, **caractérisé en ce que** ladite colonne de distillation fonctionne à une pression inférieure à la pression atmosphérique.

4. Procédé de distillation selon la revendication 3, **caractérisé en ce qu'**on fournit une composition pétrolière contenant des hydrocarbures à haut point d'ébullition.

5. Procédé de distillation selon la revendication 1, **caractérisé en ce que** ladite colonne de distillation fonctionne à une pression supérieure à la pression atmosphérique.

6. Procédé de distillation selon la revendication 5, **caractérisé en ce qu'**on fournit du pétrole brut comme composition pétrolière.

7. Procédé de distillation selon l'une quelconque des revendications 1 à 6, **caractérisé en ce qu'**on fournit une composition de bisulfite comprenant du bisulfite de sodium.

8. Procédé de distillation selon l'une quelconque des revendications 1 à 7, **caractérisé en ce qu'**on injecte à l'intérieur dudit mélange aqueux une quantité de ladite composition de bisulfite de manière à ce que le rapport molaire du bisulfite et du composé aldéhydique soit supérieur à trois.

9. Installation de distillation de composition pétrolière pour la mise en oeuvre du procédé selon l'une quelconque des revendications 1 à 8, **caractérisée en ce qu'**elle comprend :
- une colonne de distillation (18, 19, 38, 60) présentant une extrémité de sortie inférieure (20, 40, 62) opposée à une extrémité de sortie supérieure (22, 23, 42, 64) ;
- un réceptacle (24, 21, 46, 66) relié à ladite extrémité de sortie supérieure (22, 23, 42, 64) ;
- une arrivée d'une composition pétrolière contenant du sulfure d'hydrogène et un composé aldéhydique pour alimenter ladite colonne de distillation (18, 19, 38, 60) avec ladite composition pétrolière, et des moyens de production de vapeur d'eau (34, 56, 76) pour pouvoir alimenter ladite colonne de distillation avec de la vapeur d'eau, tandis qu'un mélange aqueux contenant du sulfure d'hydrogène et du composé aldéhydique est récupéré à l'intérieur dudit réceptacle (24, 21, 46, 66) ;
**caractérisée en ce qu'**elle comprend en outre un réservoir d'une composition de bisulfite (30, 31, 52, 72) relié audit réceptacle (24, 21, 46, 66), pour pouvoir injecter de ladite composition de bisulfite à l'intérieur dudit mélange aqueux et de manière à pouvoir inhiber la polymérisation dudit sulfure d'hydrogène et dudit composé aldéhydique.
